# EUROPÄISCHE PATENTSCHRIFT

(11) **EP 1 704 067 B1**
(45) Veröffentlichungstag und Bekanntmachung des Hinweises auf die Patenterteilung: **30.05.2007**
(21) Anmeldenummer: 04801196.9
(22) Anmeldetag: 02.12.2004
(51) Int. Cl.: B60N 2/02, B60N 2/20

(54) **VERRIEGELUNGSVORRICHTUNG FÜR EINEN FAHRZEUGSITZ**
LOCKING MECHANISM FOR A VEHICLE SEAT
DISPOSITIF DE VERROUILLAGE D'UN VEHICULE

(30) Priorität: 12.01.2004 DE 102004001766
(43) Veröffentlichungstag der Anmeldung: 27.09.2006
(73) Patentinhaber: KEIPER GmbH & Co. KG, 67657 Kaiserslautern (DE)
(72) Erfinder: CHRISTOFFEL, Thomas, 66909 Herschweiler-Pettersheim (DE); BÄUMCHEN, Carsten, 66649 Oberthal (DE)
(74) Vertreter: Patentanwälte Hosenthien-Held und Dr. Held
(86) Internationale Anmeldenummer: PCT/EP2004/013699
(87) Internationale Veröffentlichungsnummer: WO 2005/065988

(56) Entgegenhaltungen:
- EP-A- 1 356 984
- US-A1- 2003 132 656
- PATENT ABSTRACTS OF JAPAN Bd. 1998, Nr. 14, 31. Dezember 1998 (1998-12-31) & JP 10 236193 A (DELTA KOGYO CO LTD), 8. September 1998 (1998-09-08)

## Beschreibung

Die Erfindung betrifft eine Verriegelungsvorrichtung, insbesondere für einen Fahrzeugsitz, mit den Merkmalen des Oberbegriffs des Anspruches 1.

Bei einer bekannten Verriegelungsvorrichtung dieser Art sind innerhalb eines weitgehend geschlossenen, metallischen Gehäuses die Klinke und zwei Sicherungselemente angeordnet. Das Gehäuse wird an einem Strukturteil des Fahrzeugsitzes oder des Kraftfahrzeuges befestigt und durch eine an der Außenseite der Grundplatte aufgeclipste Blende aus Kunststoff abgedeckt.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Dadurch, daß die Grundplatte auf ihrer Außenseite als Blende und/oder Abdeckung ausgebildet ist, muß keine gesondert ausgebildete Blende angebracht werden, um die Sicht auf technisch zweckmäßig ausgeformte Bauteile und offene Hohlräume zu verhindern und diese hinter der Blende zu verstecken. Dies reduziert die Anzahl der benötigten Bauteile, vereinfacht die Montage und senkt die Kosten, wozu auch das Entfallen der Verclipsung der Blende beiträgt. Ferner erhöht sich die Lebensdauer, und es entfällt eine Schnittstelle zwischen den Bauteilen. Unter der Außenseite soll die sichtbare, vom Strukturteil, an dem die Verriegelungsvorrichtung zu befestigen ist, abgewandte Seite der Grundplatte verstanden werden.

Die Grundplatte kann in ihrer Blendenfunktion besonders einfach und kostengünstig an die Erfordernisse und Kundenwünsche angepasst werden, wenn die Grundplatte in bevorzugter Ausführung aus Kunststoff ausgebildet ist. Sie kann aber auch aus einem anderen weichen, formbaren Material bestehen, beispielsweise aus gebürstetem Aluminium. Sofern dabei eine Verstärkung erforderlich ist, kann die Grundplatte ein Einlegeteil aus einem höherfesten Material, vorzugsweise aus Stahl, aufweisen, welches beispielsweise vom Kunststoff umspritzt ist. Als weitere Verstärkung kann ein Koppelblech auf die Lagerelemente für die Klinke und die Sicherungselemente gesteckt sein. Zur Verbesserung ihrer Blendenfunktion ist die (sichtbare) Außenseite der Grundplatte als Sichtfläche ausgebildet, d.h. in Farbe, Form und Oberflächenstruktur optisch ansprechender als eine technisch zweckmä-ßige Außenhaut ausgebildet, beispielsweise genarbt und/oder gefärbt und/oder lackiert.

Das Gehäuse weist vorzugsweise eine von der Grundplatte abstehende, vorzugsweise einstückig mit ihr ausgebildete Seitenwand auf, welche von den Rändern der Grundplatte beabstandet und nach innen versetzt angeordnet ist, womit die Seitenwand bauraumsparend den durch die Klinke, die Sicherungselemente und deren Schwenkbereiche vorgegebenen Bereich umschließt, während die Grundplatte in ihrer Form auf den Anwendungsfall abgestimmt sein kann, beispielsweise im wesentlichen rechteckförmig sein kann. Der Bereich zwischen den Rändern der Grundplatte und deren Seitenwänden dient dann lediglich zur Verbesserung der Blendenfunktion der Grundplatte.

In bevorzugter Ausführung ist das Gehäuse halboffen ausgebildet, und ein Strukturteil, an dem die Verriegelungsvorrichtung zu befestigen ist, schließt das Gehäuse. Dadurch muß kein gesonderter Deckel vorgesehen werden, was Material, Gewicht und Bauraum spart, insbesondere unnötige Materialdopplungen vermeidet. Die vorzugsweise bereits für den Normalgebrauch funktionsfähige und prüffähige, zu einer Seite hin offene Verriegelungsvorrichtung erhält durch die Anbringung an dem Strukturteil ihre volle Festigkeit, insbesondere im Hinblick auf die Belastungen im Crashfall. Zugleich werden die Bauteile innerhalb der Verriegelungsvorrichtung durch das Schließen des Gehäuses vor Beschädigungen und Verschmutzungen geschützt.

Die Lagerelemente für die Klinke und die Sicherungselemente können am Gehäuse oder an einer gesonderte ausgebildeten Lagerplatte vorgesehen sein, welche das Gehäuse beispielsweise als eine Art Deckel schließt.

Bei einer Verriegelungsvorrichtung mit erhöhter Verriegelungssicherheit und erhöhter Belastbarkeit im Crashfall sind ein Spannexzenter und ein Fangstück als Sicherungselemente vorgesehen, wobei der federbelastete Spannexzenter im verriegelten Zustand die Klinke mit einem schließenden Moment beaufschlagt und das Fangstück im Crashfall die Klinke abstützt.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloß zur Befestigung der Lehne an der Fahrzeugstruktur, wobei die Verriegelungsvorrichtung an einem sitzstrukturfesten oder einem fahrzeugstrukturfesten Strukturteil angebracht und das Gegenelement entsprechend fahrzeugstrukturfest oder sitzstrukturfest ist. Die Verriegelungsvorrichtung kann auch in einen Gelenkbeschlag integriert sein, der zur Neigungseinstellung der Lehne vorgesehen ist, insbesondere wenn eines der Beschlagteile als Hohlkasten auszubilden ist.

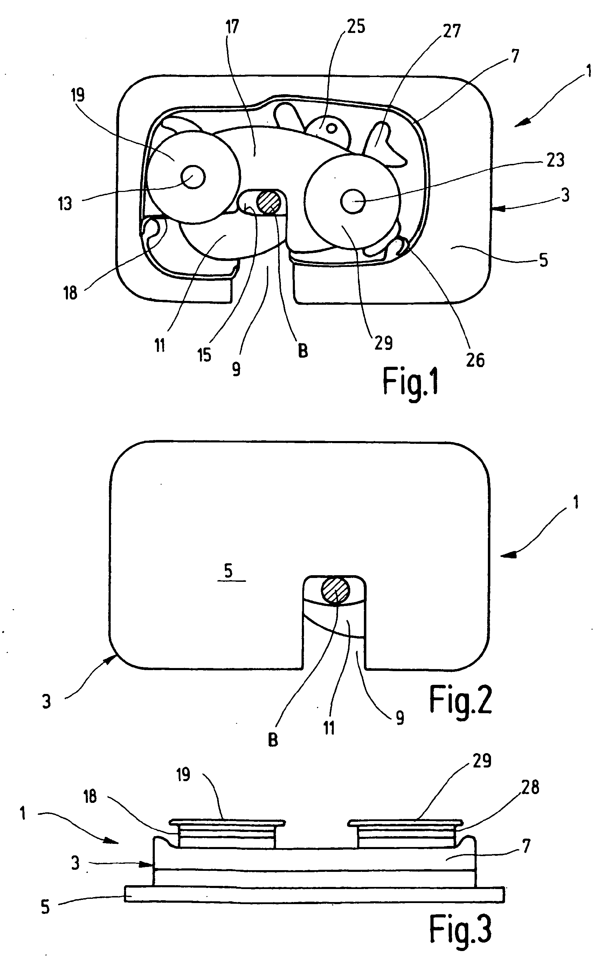

Im folgenden ist die Erfindung anhand eines in der Zeichnung dargestellten Ausführungsbeispiels und einer Abwandlung hierzu näher erläutert. Es zeigen
- Fig. 1: eine Seitenansicht des Ausführungsbeispiels mit Blick auf die Innenseite,
- Fig. 2: eine Seitenansicht des Ausführungsbeispiels mit Blick auf die Außenseite,
- Fig. 3: eine Draufsicht auf das Ausführungsbeispiel,

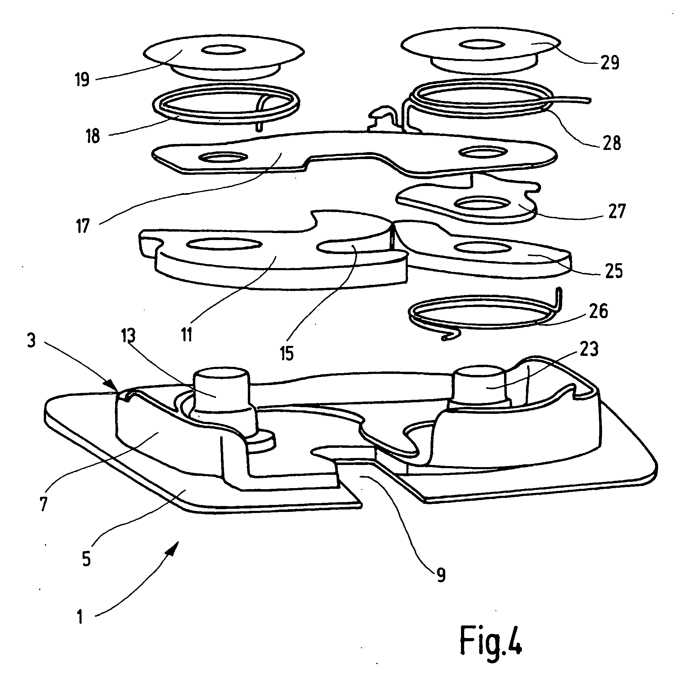

- Fig. 4: eine Explosionsdarstellung des Ausftihrungsbeispiels, und

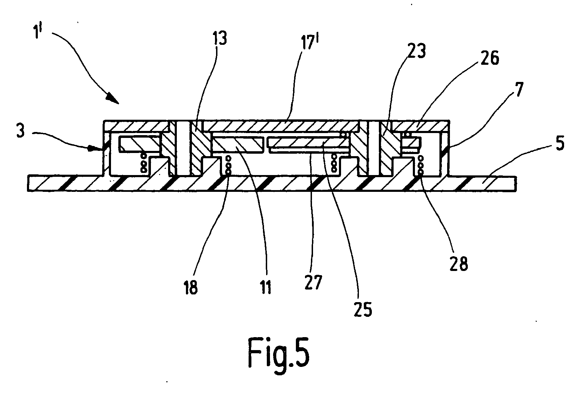

- Fig. 5: einen Schnitt durch die Abwandlung des Ausfiihrungsbeispiels.

Eine Verriegelungsvorrichtung 1 ist zur lösbaren Verbindung einer Lehne eines Fahrzeugsitzes mit der Fahrzeugstruktur eines Kraftfahrzeuges vorgesehen, könnte aber auch zur Bodenanbindung eines Fahrzeugsitzes oder als Motorhauben- oder Heckklappenschloß eingesetzt werden. Die Verriegelungsvorrichtung 1 weist ein halboffenes Gehäuse 3 aus Kunststoff mit einer zur Außenseite hin ebenen, im wesentlichen rechteckförmigen Grundplatte 5 auf, welche vertikal und in Fahrtrichtung ausgerichtet ist und die nachfolgend verwendeten Richtungsangaben definiert. In der Grundplatte 5 kann optional ein Einlegeteil aus Stahl oder einem anderen, gegenüber dem Kunststoff höherfesten Material vorgesehen sein, welches in die Grundplatte 5 eingespritzt ist. Von der Grundplatte 5 steht senkrecht eine einstückig mit der Grundplatte 5 ausgebildete Seitenwand 7 ab, welche von den Rändern der Grundplatte 5 beabstandet und gegenüber diesen nach innen versetzt ist und einen durch die nachfolgend beschriebenen Bauteile vorgegebenen Bereich umschließt. An einer Längsseite des Gehäuses 3 ist eine Bolzenaufnahme 9 ausgebildet, welche sich nach außen öffnet und der Aufnahme eines fahrzeugstrukturfesten Bolzens B oder eines anderen Gegenelementes dient. Dabei ist die Breite der Bolzenaufnahme 9 für einen Toleranzausgleich größer als der Durchmesser des Bolzens B. Das Gegenelement kann auch ein Abschnitt eines Bügels sein.

Eine Klinke 11 ist auf einem von der Grundplatte 5 parallel zur Seitenwand 7 abstehenden ersten Lagerelement 13 schwenkbar gelagert, welches am Gehäuse 3 angeformt ist oder als gesondert ausgebildeter Bolzen mit dem Gehäuse 3 verbunden ist. Zur Befestigung der Verriegelungsvorrichtung 1 ist das erste Lagerelement 13 vorzugsweise hohl ausgebildet. Die Klinke 11 weist zum Zusammenwirken mit dem Bolzen B ein Hakenmaul 15 auf, welches in einem verriegelten Zustand der Verriegelungsvorrichtung 1 die Bolzenaufnahme 9 wenigstens näherungsweise senkrecht kreuzt und verschließt, während es in einem geöffneten Zustand die Bolzenaufnahme 9 öffnet.

Parallel zur Grundplatte 5 und zur Schwenkebene der Klinke 11 ist auf das erste Lagerelement 13 ein Koppelblech 17 geschoben, wobei das erste Lagerelement 13 vorzugsweise eine Stufe als Anschlag zum Aufschieben des Koppelblechs 17 aufweist. Auf der von der Klinke 11 abgewandten Seite des Koppelblechs 17 ist auf dem ersten Lagerelement 13 eine erste Drehfeder 18 angeordnet, welche die Klinke 11 mit einem öffnenden Moment beaufschlagt. Vom freien Ende des ersten Lagerelements 13 her ist ein erster Haltering 19 aus Kunststoff bis zum Koppelblech 17 aufgeschoben, insbesondere aufgepresst. Der erste Haltering 19 sichert die Klinke 11 in axialer Richtung. Auf der von der Klinke 11 abgewandten Seite ist am ersten Haltering 19 ein Flansch angeformt.

Beabstandet zum ersten Lagerelement 13 ist ein prinzipiell gleich ausgebildetes zweites Lagerelement 23 am Gehäuse 3 angeformt oder mit diesem verbunden. Auf dem zweiten Lagerelement 23 ist ein Fangstück 25 schwenkbar gelagert, welches mittels einer zwischen der Grundplatte 5 und dem Fangstück 25 angeordneten zweiten Drehfeder 26 in Richtung auf die Klinke 11 vorgespannt ist. Auf der von der Grundplatte 5 abgewandten Seite des Fangstücks 25 ist ein Spannexzenter 27 auf dem zweiten Lagerelement 23 gelagert, welcher von einer dritten Drehfeder 28 vorgespannt die Klinke 11 im verriegelten Zustand mit einem schließenden Moment beaufschlagt und dadurch in Eingriff mit dem Bolzen B hält.

Entsprechend zum ersten Lagerelement 13 ist auf das zweite Lagerelement 23 das Koppelblech 17 geschoben, wobei das zweite Lagerelement 23 vorzugsweise ebenfalls eine Stufe als Anschlag aufweist. Unter Zwischenlage der dritten Drehfeder 28 ist vom freien Ende her auf das zweite Lagerelement 23 ein zweiter Haltering 29 bis zum Koppelblech 17 aufgeschoben, insbesondere aufgepresst, welcher dem ersten Haltering 19 gleicht, d.h. auch aus Kunststoff besteht und einen angeformten Flansch aufweist. Der zweite Haltering 29 sichert den Spannexzenter 27 und das Fangstück 25 in axialer Richtung.

Im Nörmalfall ist das Fangstück 25 beabstandet zur Klinke 11 angeordnet. Im Crashfall, wenn die Klinke 11 ein öffnendes Moment erfährt und den Spannexzenter 27 wegdrückt, gelangt die Klinke 11 in Anlage an das Fangstück 25, welches die Klinke 11 abstützt und ein Öffnen derselben verhindert. Zum Entriegeln der Verriegelungsvorrichtung 1 wird in an sich bekannter Weise, beispielsweise über einen angeformten Entriegelungsbolzen, einen Hebel oder einen Bowdenzug, das Fangstück 25 von der Klinke 11 weggeschwenkt, wobei es über einen angeformten Mitnehmer, gegebenenfalls nach einem kleinen Leerhub, den Spannexzenter 27 mitnimmt. Die Klinke 11 wird dann nicht länger gesichert, durch die erste Drehfeder 18 aufgezogen und im entriegelten Zustand vom Fangstück 25 aufgehalten. Der Spannexzenter 27 und das Fangstück 25 sind somit Sicherungselemente für die Klinke 11 sowohl im verriegelten als auch im geöffneten Zustand.

Mit den vorstehend beschriebenen Bauteilen hat die Verriegelungsvorrichtung 1 für den Normalgebrauch bereits ihre Funktionsfähigkeit, bildet also eine prüffähige Einheit, auch wenn das Gehäuse 3 noch offen ist. Um die volle Festigkeit für den Crashfall zu erreichen, schließt ein Strukturteil, an dem die Verriegelungsvorrichtung 1 zu befestigen ist, das Gehäuse 3 weitgehend und verstärkt zugleich die Lagerstellen, wobei das Strukturteil an den Stirnseiten der Lagerelemente 13 und 23 anliegt.

Die Grundplatte 5 dient erfindungsgemäß nicht nur der Bildung des Gehäuses 3, sondern auf der Außenseite zugleich als Blende und Abdeckung. Hierfür kann das Gehäuse 3 insbesondere im Bereich der als Sichtfläche ausgebildeten Außenseite der Grundplatte 5 je nach Anwendungsfall und Kundenwunsch genarbt oder anderweitig strukturiert, eingefärbt, lackiert oder in einer beliebigen Kombination davon ausgebildet sein. Je nach Lastanfordung kann das Gehäuse 3 ohne Einlegeteil versehen sein und/oder aus mehreren Kunststoffkomponenten bestehen, so daß die Funktionsbereiche (Lagerstelle) eine andere Zusammensetzung aufweisen als die Blenden- und Abdeckbereiche.

In einer Abwandlung, welche dem Ausführungsbeispiel - soweit nicht anders beschrieben - gleicht, ist bei der Verriegelungsvorrichtung 1' anstelle des Koppelblechs 17 und der Halteringe 19 und 29 eine vom Gehäuse 3 gesondert ausgebildete Lagerplatte 17' vorgesehen, an welcher die Lagerelemente 13 und 23 befestigt sind, beispielsweise eingepreßt sind. Zugleich schließt die Lagerplatte 17' das Gehäuse 3 in der Art eines Deckels. Das Gehäuse 3 mit der Grundplatte 5 hat dann nicht mehr die Lagerfunktion, sondern nur noch die Blenden- und Abdeckfunktion.

### Bezugszeichenliste

- 1, 1': Verriegelungsvorrichtung
- 3: Gehäuse
- 5: Grundplatte
- 7: Seitenwand
- 9: Bolzenaufnahme
- 11: Klinke
- 13: erster Lagerelement
- 15: Hakenmaul
- 17: Koppelblech
- 17': Lagerplatte
- 18: erste Drehfeder
- 19: erster Haltering
- 23: zweites Lagerelement
- 25: Fangstück
- 26: zweite Drehfeder
- 27: Spannexzenter
- 28: dritte Drehfeder
- 29: zweiter Haltering
- B: Bolzen, Gegenelement

## Patentansprüche

1. Verriegelungsvorrichtung, insbesondere für einen Fahrzeugsitz, mit einem eine Grundplatte (5) aufweisenden Gehäuse (3), einer im Gehäuse (3) angeordneten, schwenkbar gelagerten Klinke (11) zum Verriegeln mit einem Gegenelement (B) und wenigstens einem ebenfalls im Gehäuse (3) angeordneten, schwenkbar gelagerten Sicherungselement (25, 27), welches durch Zusammenwirken mit der Klinke (11) einen verriegelten Zustand sichert, **dadurch gekennzeichnet, daß** die Grundplatte (5) auf ihrer Außenseite als Blende und/oder Abdeckung ausgebildet ist.

2. Verriegelungsvorrichtung nach Anspruch 1, **dadurch gekennzeichnet, daß** die Grundplatte (5) aus einem weicheren Material, insbesondere Kunststoff, ausgebildet ist.

3. Verriegelungsvorrichtung nach Anspruch 2, **dadurch gekennzeichnet, daß** die Grundplatte (5) ein Einlegeteil aus einem höherfesten Material, insbesondere aus Stahl, aufweist.

4. Verriegelungsvorrichtung nach einem der Ansprüche 1 bis 3, **dadurch gekennzeichnet, daß** die Grundplatte (5) auf ihrer Außenseite genarbt und/oder gefärbt und/oder lackiert ist.

5. Verriegelungsvorrichtung nach einem der Ansprüche 1 bis 4, **dadurch gekennzeichnet, daß** das Gehäuse eine von der Grundplatte (5) abstehende Seitenwand (7) aufweist, welche von den Rändern der Grundplatte (5) beabstandet und nach innen versetzt angeordnet ist.

6. Verriegelungsvorrichtung nach Anspruch 5, **dadurch gekennzeichnet, daß** die Grundplatte (5) und die Seitenwand (7) einstückig ausgebildet sind.

7. Verriegelungsvorrichtung nach Anspruch 5 oder 6, **dadurch gekennzeichnet, daß** die Seitenwand (7) einen durch die Klinke (11) und die Sicherungselemente (25, 27) vorgegebenen Bereich umschließt, wobei die Grundplatte (5) im wesentlichen rechteckförmig ist.

8. Verriegelungsvorrichtung nach einem der Ansprüche 1 bis 7, **dadurch gekennzeichnet, daß** das Gehäuse (3) wenigstens zwei Lagerelemente (13, 23) für die Klinke (11) und die Sicherungselemente (25, 27) aufweist, auf welche ein Koppelblech (17) gesteckt ist.

9. Verriegelungsvorrichtung nach einem der Ansprüche 1 bis 8, **dadurch gekennzeichnet, daß** das Gehäuse (3) halboffen ausgebildet ist und ein Strukturteil, an dem die Verriegelungsvorrichtung (1) zu befestigen ist, das Gehäuse (3) schließt.

10. Verriegelungsvorrichtung nach einem der Ansprüche 1 bis 7, **dadurch gekennzeichnet, daß** wenigstens zwei Lagerelemente (13, 23) für die Klinke (11) und die Sicherungselemente (25, 27) an einer vom Gehäuse (3) gesondert ausgebildeten Lagerplatte (17') vorgesehen sind.

11. Verriegelungsvorrichtung nach einem der Ansprüche 1 bis 10, **dadurch gekennzeichnet, daß** ein Spannexzenter (27) und ein Fangstück (25) als Sicherungselemente (25, 27) vorgesehen sind, wobei der federbelastete Spannexzenter (27) im verriegelten Zustand die Klinke (11) mit einem schließenden Moment beaufschlagt und das Fangstück (25) im Crashfall die Klinke (11) abstützt.

## Claims

1. Locking device, especially for a vehicle seat, having a housing (3) with a base plate (5), a pawl (11) pivotally mounted in the housing (3) for locking with a counter element (B), and at least one pivotally mounted securing element (25, 27) likewise arranged in the housing (3) and which secures a locked state by co-operation with the pawl (11), **characterised in that** on its outer side the base plate (5) is in the form of a panel and/or covering.

2. Locking device according to Claim 1, **characterised in that** the base plate (5) is formed from a relatively soft material, especially plastics material.

3. Locking device according to Claim 2, **characterised in that** the base plate (5) comprises an insert of a higher strength material, especially of steel.

4. Locking device according to any one of Claims 1 to 3, **characterised in that** the base plate (5) is embossed and/or coloured and/or painted on its outer side.

5. Locking device according to any one of Claims 1 to 4, **characterised in** the housing comprises a side wall (7) that projects from the base plate (5), is spaced from the edges of the base plate (5) and is offset inwardly.

6. Locking device according to Claim 5, **characterised in that** the base plate (5) and the side wall (7) are of one-piece construction.

7. Locking device according to Claim 5 or 6, **characterised in that** the side wall (7) encloses a region predetermined by the pawl (11) and the securing elements (25, 27), the base plate (5) being substantially rectangular.

8. Locking device according to any one of Claims 1 to 7, **characterised in that** the housing (3) comprises at least two bearing elements (13, 23) for the pawl (11) and the securing elements (25, 27), on which bearing elements a coupling plate (17) is placed.

9. Locking device according to any one of Claims 1 to 8, **characterised in that** the housing (3) is of half-open construction and a structural part, to which the locking device (1) is to be fastened, closes the housing (3).

10. Locking device according to any one of Claims 1 to 7, **characterised in that** at least two bearing elements (13, 23) for the pawl (11) and the securing elements (25, 27) are provided on a bearing plate (17') constructed separately from the housing (3).

11. Locking device according to any one of Claims 1 to 10, **characterised in that** a clamping eccentric (27) and an intercepting component (25) are provided as securing elements (25, 27), the spring-loaded clamping eccentric (27) in the locked state acting on the pawl (11) with a closing moment and the intercepting element (25) supporting the pawl (11) in the event of a crash.

## Revendications

1. - Dispositif de verrouillage, en particulier pour un siège de véhicule, avec un boîtier (3) présentant une plaque de base (5), un cliquet (11) monté pivotant, disposé dans le boîtier (3), pour le verrouillage avec un contre-élément (D), et au moins un élément de blocage (25, 27) monté pivotant, disposé également dans le boîtier (3), lequel élément de blocage, par coopération avec le cliquet (11), bloque un état verrouillé, **caractérisé par le fait que** la plaque de base (5) est réalisée sur sa face extérieure sous la forme d'un obturateur et/ou d'un couvercle.

2. - Dispositif de verrouillage selon la revendication 1, **caractérisé par le fait que** la plaque de base (5) est réalisée en une matière plus souple, en particulier en une matière plastique.

3. - Dispositif de verrouillage selon la revendication 2, **caractérisé par le fait que** la plaque de base présente une pièce d'insertion en une matière de plus haute résistance, en particulier en acier.

4. - Dispositif de verrouillage selon l'une des revendications 1 à 3, **caractérisé par le fait que** la plaque de base (5) est grainée et/ou teintée et/ou laquée sur sa face extérieure.

5. - Dispositif de verrouillage selon l'une des revendications 1 à 4, **caractérisé par le fait que** le boîtier présente une paroi latérale (7) distante de la plaque de base (5), laquelle paroi latérale est disposée éloignée des bords de la plaque de base (5) et décalée vers l'intérieur.

6. - Dispositif de verrouillage selon la revendication 5, **caractérisé par le fait que** la plaque de base (5) et la paroi latérale (7) sont formées d'une seule pièce.

7. - Dispositif de verrouillage selon l'une des revendications 5 ou 6, **caractérisé par le fait que** la paroi latérale (7) enferme une zone prédéfinie par le cliquet (11) et les éléments de blocage (25, 27), à l'occasion de quoi la plaque de base (5) est sensiblement rectangulaire.

8. - Dispositif de verrouillage selon l'une des revendications 1 à 7, **caractérisé par le fait que** le boîtier (3) présente au moins deux éléments de support (13, 23) pour le cliquet (11) et les éléments de blocage (25, 27), sur lesquels est fixée une tôle de couplage (17).

9. - Dispositif de verrouillage selon l'une des revendications 1 à 8, **caractérisé par le fait que** le boîtier (3) est réalisé semi ouvert et une partie de structure, sur laquelle le dispositif de verrouillage (1) doit être fixé, ferme le boîtier (3).

10. - Dispositif de verrouillage selon l'une des revendications 1 à 7, **caractérisé par le fait qu'**au moins deux éléments de support (13, 27) pour le cliquet (11) et les éléments de blocage (25, 27) sont prévus sur une plaque de support (17') réalisée séparée du boîtier (3).

11. - Dispositif de verrouillage selon l'une des revendications 1 à 10, **caractérisé par le fait qu'**un excentrique de serrage (27) et une pièce d'arrêt (25) sont prévus en tant qu'éléments de blocage (25, 27), à l'occasion de quoi, l'excentrique de serrage (27) chargé par ressort heurte à l'état verrouillé le cliquet (11) avec un moment de fermeture et la pièce d'arrêt (25) soutient le cliquet (11) en cas de collision.
